Europäisches Patentamt

(19) European Patent Office                    (11) Numéro de publication: **0 076 206**

Office européen des brevets                                              **B1**

(12)                    **FASCICULE DE BREVET EUROPEEN**

(45) Date de publication du fascicule du brevet:        (51) Int. Cl.⁴: **H 02 K  23/20,** H 02 P  7/00
   **21.08.85**

(21) Numéro de dépôt: **82401729.7**

(22) Date de dépôt: **24.09.82**

(54) **Dispositif moteur électrique, notamment pour lève-vitre à deux vitesses.**

(30) Priorité: **25.09.81  FR 8118102**

(43) Date de publication de la demande:
   **06.04.83 Bulletin 83/14**

(45) Mention de la délivrance du brevet:
   **21.08.85 Bulletin 85/34**

(84) Etats contractants désignés:
   **DE GB IT**

(56) Documents cités:
   **DE - A - 2 048 740**
   **DE - A - 2 137 834**
   **FR - A - 1 450 247**
   **FR - A - 1 556 599**

(73) Titulaire: **ACIERS ET OUTILLAGE PEUGEOT Société
   dite:, F-25400 Audincourt (Doubs) (FR)**

(72) Inventeur: **Barge, Jean, 12, rue du Caporal Peugeot,
   F-25200 Montbeliard (FR)**

(74) Mandataire: **Moncheny, Michel et al, c/o Cabinet
   Lavoix 2 Place d'Estienne d'Orves, F-75441 Paris
   Cedex 09 (FR)**

## Description

La présente invention est relative aux dispositifs moteurs destinés à entraîner des objets mobiles tels que les panneaux ouvrants (vitres, toit ouvrant et autres) dans un véhicule automobile. Plus particulièrement, l'invention a trait à un dispositif moteur pour lève-vitre.

Dans la technique des petits moteurs électriques à courant continu et à aimants permanents, il est déjà connu d'obtenir un fonctionnement à deux vitesses distinctes en prévoyant sur le collecteur un troisième balai auxilliaire décalé d'un angle donné par rapport à la ligne neutre de l'induit sur laquelle sont placés des balais principaux. Un tel angencement est connu notamment du document FR-A-1 450 247 pour les dispositifs moteurs pour essuie-glace dans les véhicules automobiles.

Il est évident que cet agencement n'est pas utilisable pour les lève-vitres puisqu'il ne peut fournir une rotation reversible alors que bien entendu, une vitre ou un toit ouvrant, doit pouvoir être ouvert et fermé.

Cependant, il est connu d'après le FR-1 556 599 d'utiliser un moteur du type indiqué ci-dessus, comportant trois balais, et associé à un sélecteur qui permet de brancher le moteur sur la source d'alimentation en grande vitesse dans un sens de marche, et en petite vitesse dans l'autre sens de marche. Ainsi, dans le premier cas, le sélecteur applique la tension de la batterie entre l'un des balais placé sur la ligne neutre et le balai auxiliaire, tandis que pour la petite vitesse, tout en inversant la polarité sur le balai principal déjà branché, le sélecteur applique l'autre polarité de la source à l'autre balai principal. Par conséquent, ce montage interdit le fonctionnement à deux vitesses pour l'un et l'autre sens de rotation du moteur avec les mêmes conséquences pour la vitre à actionner.

Il est par ailleurs connu d'après le DE-2 137 834 d'utiliser un moteur à trois balais dans un lève-vitre. Dans ce cas, ce troisième balai est branché en permanence à la même polarité de la source d'alimentation et le moteur est commandé par un sélecteur monopolaire qui permet d'appliquer l'autre polarité de la source sélectivement à l'un ou l'autre des balais principaux situés sur la ligne neutre du moteur. Ce montage interdit donc le fonctionnement à deux vitesses pour les deux sens de rotation du moteur.

L'invention vise à fournir un lève-vitre pouvant utiliser un moteur simple à deux vitesses du type indiqué ci-dessus permettant de commander la vitre à deux vitesses dans les deux sens de marche du moteur.

Elle a donc objet un dispositif moteur pour organe mobile notamment pour lève-vitre d'un véhicule automobile, comportant un moteur électrique d'entraînement couplé è l'organe mobile, ce moteur étant du type à courant continu et à aimants permanents et comprenant un induit dont le collecteur coopère avec deux balais principaux placés sur la ligne neutre de l'induit et un troisième balai auxiliaire écarté angulairement de la ligne neutre, ce moteur étant relié électriquement à un sélecteur capable d'appliquer sélectivement la tension d'alimentation auxdits balais pour déterminer des vitesses distinctes du moteur, caractérisé en ce que ledit moteur comporte un quatrième balai placé du même côté que le troisième balai par rapport à la ligne neutre et en ce que ledit sélecteur est agencé pour appliquer sélectivement l'une ou l'autre des polarités de la tension d'alimentation auxdits troisième et quatrième balais pour obtenir un fonctionnement réversible du moteur à chacune desdites vitesses distinctes.

L'invention est exposée ci-après plus en détail à l'aide de dessins représentant seulement un mode d'éxécution, sur lesquels:

la Fig. 1 est une vue en perspective avec arrachement partiel d'un moteur électrique utilisable dans le dispositif moteur suivant l'invention;

la Fig. 2 représente de ce même moteur, une vue schématique d'un collecteur conformément à un autre mode de réalisation de l'invention;

la Fig. 3 est un schéma électrique du dispositif moteur utilisant le moteur électrique de la Fig.1;

la Fig. 4 représente une vue en perspective schématique d'un commutateur sélecteur utilisé dans le schéma de la Fig. 3;

la Fig. 5 montre un schéma électrique d'un dispositif moteur suivant l'invention utilisant le moteur électrique de la Fig. 2;

la Fig. 6 est un schéma électrique d'un autre mode de réalisation de l'invention;

la Fig. 7 représente un schéma électrique d'un autre mode de réalisation de l'invention;

La Fig. 8 est un schéma partiel d'un commutateur sélecteur utilisable dans le dispositif moteur de l'invention.

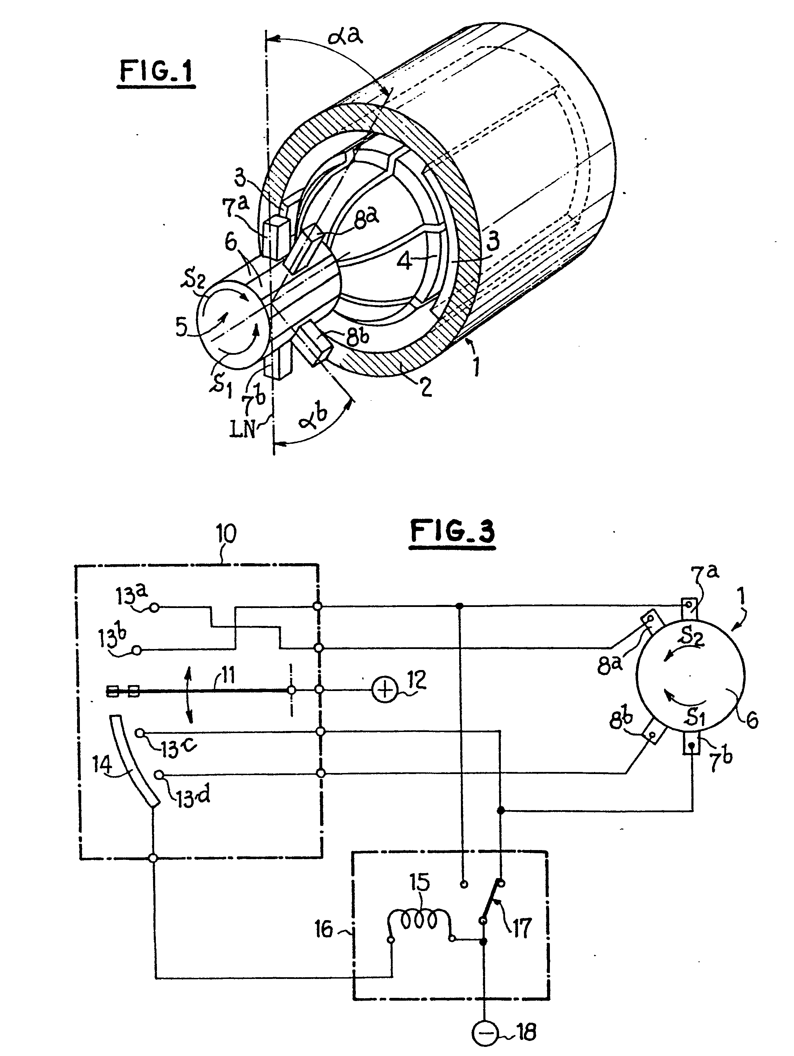

On se réfère tout d'abord à la Fig. 1 qui représente une vue en perspective partielle d'un moteur électrique 1 destiné à être utilisé dans le dispositif moteur de l'invention. Ce moteur comporte de façon classique, une carcasse 2 dans laquelle sont montés deux aimants permanents 3 dans des positions fixes diamétralement opposées. Le moteur comporte également un induit 4 pourvu d'un collecteur 5 composé de lamelles 6. Ce collecteur 5 coopère avec deux balais principaux 7a et 7b diamétralement opposés et situés sur la ligne neutre LN du moteur.

Conformément à l'invention, le moteur électrique comporte également deux balais auxiliaires 8a et 8b décalés angulairement respectivement d'angles $\alpha a$ et $\alpha b$ par rapport à la ligne neutre LN, ces deux balais étant situés dans des quadrants adjacents de même côté de la ligne neutre.

On sait que lorsqu'on munit un moteur électrique à courant continu et à aimants permanents d'un

2

balai auxiliaire, il est possible d'augmenter la vitesse de rotation de ce moteur par rapport à sa vitesse nominale, si ce balai auxiliaire est placé angulairement à l'arrière du balai recevant la tension positive de la source d'alimentation, compte tenu du sens de rotation du moteur. Dans ces conditions, la vitesse obtenue lors de l'utilisation des balais principaux est plus faible que celle utilisée lorsque le balai auxiliaire reçoit la tension positive et le balai principal opposé la tension négative.

Dans le moteur suivant l'invention tout se passe comme si on réunissait dans le même moteur deux agencements de ce type, mais destinés à des moteurs conçus pour tourner dans des sens opposés. Il en résulte que dans le moteur suivant l'invention, on peut obtenir quatre modes de fonctionnement qui sont respectivement:

1) Rotation dans le premier sens à grande vitesse;
2) Rotation dans le premier sens à petite vitesse;
3) Rotation dans le second sens à grande vitesse;
4) Rotation dans le second sens à petite vitesse.

Ainsi, pour le moteur de la Fig. 1, on peut dresser le tableau suivant:

Tableau I

| Rotation | Balais | | | |
| | 7a | 7b | 8a | 8b |
| --- | --- | --- | --- | --- |
| Sens S1 G. V. | 0 | — | + | 0 |
| Sens S1 P. V. | + | — | 0 | 0 |
| Repos | 0 | 0 | 0 | 0 |
| Sens S2 G. V. | — | 0 | 0 | + |
| Sens S2 P. V. | — | + | 0 | 0 |

GV = grande vitesse
PV = petite vitesse
+ = Application de la polarité positive de la tension d'alimentation
— = Application de la polarité négative de la tension d'alimentation
0 = Coupure de la tension d'alimentation

On voit donc que par une commutation appropriée des tensions appliquées aux balais principaux 7a et 7b et aux balais auxiliaires 8a et 8b, on peut obtenir les quatre configurations de fonctionnement indiquées précédemment.

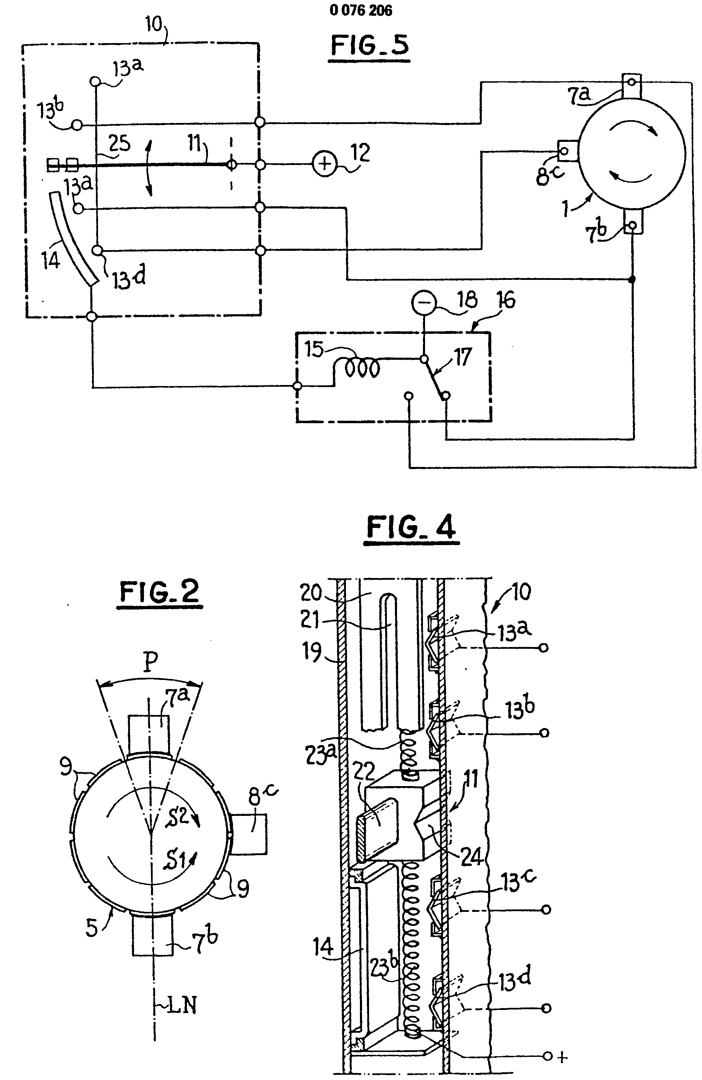

Si on modifie l'angle $\alpha$ de décalage entre le balai auxiliaire et le balai principal qu'il est destiné à remplacer pour la modification de la vitesse, on peut obtenir différentes valeurs de celle-ci. On conçoit donc que le moteur tourne à une vitesse déterminée lorsque le balai auxiliaire est placé exactement à 90° de la ligne neutre LN de telle sorte que l'angle $\alpha$ soit égal à 90°. Ce décalage pouvant être fait pour les deux balais auxiliaires 8a et 8b du moteur représenté à la Fig. 1, on conçoit que pour un certain choix de la vitesse supérieure, les deux balais auxiliaires sont confondus, de telle sorte qu'il ne reste plus que trois balais. C'est cette situation qui est représentée sur la Fig. 2 et qui constitue donc une variante importante de l'invention. Sur cette figure, on a représenté le collecteur 5, les deux balais principaux 7a et 7b situés sur la ligne neutre LN ainsi qu'un troisième balai 8c qui joue donc le rôle des balais 8a et 8b représentés sur la Fig. 1.

On a constaté que pour la variante de la Fig. 2 puisse fonctionner convenablement, il est nécessaire que le balai 8c shunte deux lames consécutives 9 du collecteur 5, lorsque les balais 7a et 7b sont sur une lame. Dans ces conditions:

Si P est le pas angulaire d'une lame 9 du collecteur (en radians), et N le nombre de lames 9 du collecteur 5, on a:

3

$$NP = 2\pi$$

On a $\dfrac{P}{2} + kP = \dfrac{\pi}{2}$ où k est un nombre entier

Donc $4\left(\dfrac{P}{2} + kP\right) = 2\pi$

soit $2p + 4kP = 2\pi$

donc $p(2 + 4k) = 2\pi = NP$

Ce qui fixe le nombre de lames N à:

$$\boxed{N = 2 + 4k}$$

et qui donne pour k entier variant de 1 à T

| k | = | 0 | 1 | 2 | 3 | 4 | 5 |
|---|---|---|---|----|----|----|----|
| N | = | 2 | 6 | 10 | 14 | 18 | 22 |

Les moteurs classiques à N = 8 lames ne peuvent donc être employés dans le cas de l'invention.

Comme pour des raisons d'économie de temps de bobinage, il est bon par ailleurs de réduire le nombre de sections de bobinage, il est préférable que N = 10, 14 ou 18 lames (suivant la puissance du moteur).

Le tableau II ci-dessous montre quelle tension doit être appliquée aux trois balais du moteur représenté sur la Fig. 2 pendant les diverses phases de fonctionnement de celui-ci.

Tableau II

| Rotation | Balais | | |
|---|---|---|---|
| | 7a | 7b | 8c |
| Sens S1 G. V. | 0 | — | + |
| Sens S1 P. V. | + | — | 0 |
| Repos | 0 | 0 | 0 |
| Sens S2 G. V. | — | 0 | + |
| Sens S2 P. V. | — | + | 0 |

La Fig. 3 représente un schéma électrique d'un dispositif moteur suivant l'invention comportant le moteur 1 muni de quatre balais ainsi qu'un sélecteur permettant de choisir les divers modes de fonctionnement du moteur. Le sélecteur 10 dont un mode de réalisation mécanique sera décrit ci-après à propos de la Fig. 4 comporte un curseur 11 qui est relié en permanence à la borne positive 12 d'une source d'alimentation qui peut être la batterie du véhicule par exemple. Ce curseur 11 peut être monté à rotation ou à coulissement rectiligne et est représenté au repos correspondant à l'arrêt du moteur 1.

Le sélecteur 10 comporte quatre contacts fixes 13a à 13d, reliés respectivement aux balais 8a, 7a, 7b, et 8b du moteur 1. Il est prévu également un contact fixe 14 avec lequel le curseur établit un circuit électrique à partir de la borne positive 12 dans les positions 3 et 4 du sélecteur à savoir lorsque le curseur se trouve soit sur le contact 13c, soit sur le contact 13d. Le contact fixe auxiliaire 14 est connecté à une bobine 15 d'un relais 16 qui comporte un contact inverseur 17. La borne de la bobine 15 qui est reliée au contact mobile de l'inverseur 17 est reliée à une borne négative 18 de la source d'alimentation. Le contact de travail de l'inverseur 17 est relié au balai 7a tandis que son contact de repos est relié au balai 7b et au contact fixe 13c du sélecteur 10. Il est à noter que le contact fixe auxiliaire 14 est dimensionné de telle façon que lorsque le curseur 11 est déplacé vers le contact fixe

4

13c à partir de la position de repos, il établit tout d'abord un circuit électrique avec le contact 14 avant de ne le faire avec le contact 13c. En fait, le contact 14 est représentatif de l'un des sens de rotation du moteur qui dans l'application à un lève-vitre est par exemple la descente de la vitre. Lorsqu'on souhaite faire tourner le moteur dans le sens S1 à petite vitesse, le curseur 11 est placé sur le contact 13b à partir de la position de repos (qui comme on le verra par la suite est une position d'équilibre du sélecteur 10). Dans ces conditions, le balai 7a reçoit la tension positive et le circuit du moteur se referme par le balai 7b et l'inverseur 17 au repos sur la borne négative 18.

Lorsque l'on déplace le curseur 11 vers le contact 13a, le moteur n'est tout d'abord plus alimenté entre les contacts 13a et 13b puis en se plaçant sur le contact 13a, le curseur 11 établit un circuit allant de la borne 12 par le contact 13a et le balai 8a à travers le moteur vers le balai 7b et la borne négative 18 de la tension d'alimentation. Il en résulte donc que le moteur tourne à grande vitesse dans le sens S1 par l'intermédiaire du balai auxiliaire 8a.

Lorsqu'on souhaite faire tourner le moteur dans le sens S2, le curseur 11 est déplacé en sens opposé pour venir d'abord en contact avec le contact auxiliaire 14 de sorte que la tension positive est appliquée à la bobine 15 du relais 16. L'inverseur 17 est alors actionné pour relier le balai 7a du moteur 1 à la tension négative. En poursuivant le mouvement du curseur 11, celui-ci établit un circuit avec le contact 13c pour appliquer la tension positive de la borne 12 au balai 7b. Il en résulte ainsi que le moteur 1 tourne dans le sens S2 à petite vitesse. Si on continue encore le mouvement du curseur 11, on obtient la grande vitesse dans le sens S2 du moteur 1, par l'intermédiaire du contact 13b, le relais 16 restant toujours excité.

La Fig. 4 représente une vue schématique en perspective d'un sélecteur 10 pouvant être utilisé de préférence dans l'application de l'invention à un lève-vitre. Dans ce cas, il est souhaitable que le sélecteur lui-même soit disposé de telle façon que ses positions correspondent aux mouvements réels de la vitre.

Le curseur 10 comporte un boîtier 19 de forme rectangulaire et placé de préférence sur la console de commande du véhicule de façon que le mouvement vers le haut ou vers l'avant du curseur 11 corresponde à la montée de la vitre (sens S1 du moteur 1, par exemple). Le boîtier 19 est fermé par un couvercle 20 dans lequel est ménagée une fente 21. Une manette 22 du sélecteur 11 s'étend à travers cette fente 21 vers l'extérieur pour permettre la commande du sélecteur 10. Le curseur 11 est monté entre deux ressorts 23a et 23b le maintenant normalement dans une position intermédiaire qui correspond à la position de repos de la Fig. 3. Dans l'une des parois du boîtier 19, sont prévues des pièces de contact correspondant aux contacts 13a à 13d représentés sur la Fig. 3. Sur la paroi opposée du boîtier est prévu le contact auxiliaire 14 dont la longueur est choisie de telle façon que les conditions de commutation correspondent à celles dérites ci-dessus à propos de la Fig. 3. Bien entendu, le curseur 11 est constitué par un bloc métallique présentant une encoche 24 coopérant avec les contacts 13a à 13d. La tension positive est apportée au curseur 11 par l'intermédiaire du ressort 23b par exemple. Bien entendu, la Fig. 4 ne représente que l'un des nombreux modes de réalisation possibles du sélecteur 10.

La Fig. 5 représente un dispositif moteur comportant un moteur 1 à trois balais 7a, 7b et 8c. Dans ce cas, le sélecteur 10 est modifié en ce sens que ses contacts fixes 13a et 13d sont reliés ensemble par l'intermédiaire d'un fil et également au balai 8c du moteur 1. Le fonctionnement du dispositif moteur de la Fig. 5 est identique à celui de la Fig. 3 à ceci près que le balai 8c remplit le rôle des balais 8a et 8b du moteur de la Fig. 1.

Il est à noter que la conception du sélecteur est de préférence telle, que ces quatre positions actives sont repérables par un point dur par exemple, ce qui est réalisé dans l'exemple de la Fig. 4 dans lequel les contacts 13a à 13d sont montés de façon élastique dans la paroi du boîtier 19 en coopérant avec l'encoche 24 du curseur 11, ladite conception de chaque contact provoquant une sensation de passage par un point dur pour l'utilisateur.

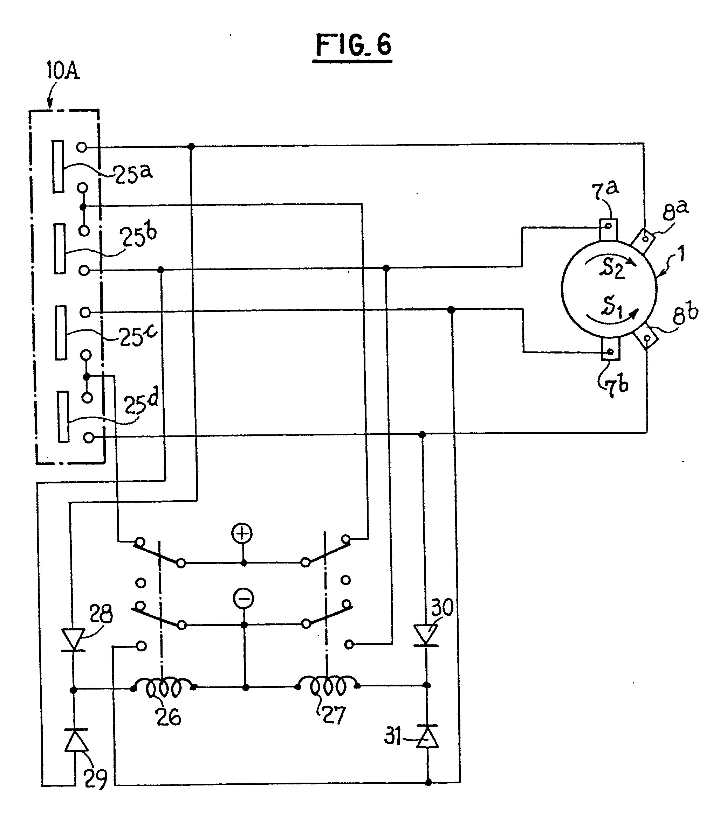

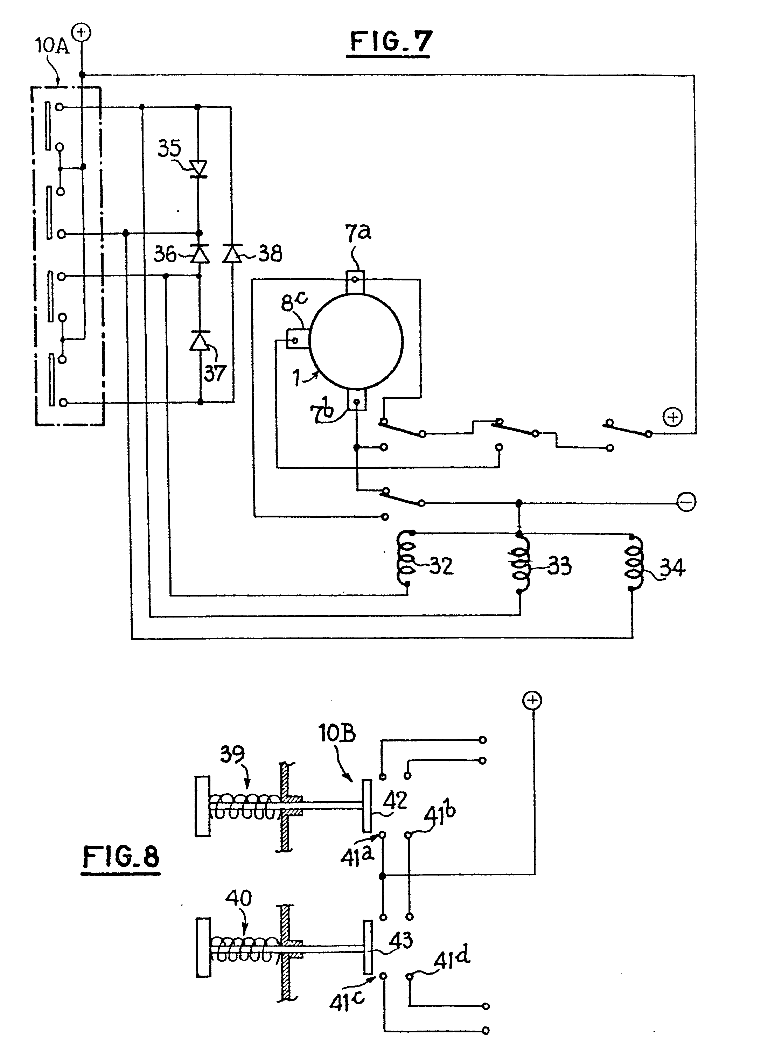

La Fig. 6 montre un autre mode de réalisation du dispositif moteur dans lequel le sélecteur est à boutons poussoirs au lieu de comporter un contact mobile agissant sélectivement sur les contacts fixes. Ce sélecteur indiqué par la référence 10A comporte quatre boutons poussoirs 25a à 25d destinés respectivement à la commande de la grande vitesse dans le sens S1 de la petite vitesse dans le sens S1, de la petite vitesse dans le sens S2 et de la grande vitesse dans le sens S2. Le sélecteur 10A coopère avec deux relais 26 et 27 auxquels sont associées des diodes 28 à 31. Ce schéma montre qu'en poussant sélectivement les boutons poussoirs 25a à 25d, on peut obtenir les quatre modes de fonctionnement du moteur 1 qui dans cette variante comporte quatre balais. Un mode de réalisation analogue du dispositif moteur est représenté sur la Fig. 7 pour un moteur à trois balais. Dans ce cas, le sélecteur 10 coopère avec trois relais 32, 33 et 34 et quatre diodes 35, à 38. Dans ce cas également, on peut obtenir les quatre modes de fonctionnement du moteur comme décrit ci-dessus.

Enfin, la Fig. 8 montre une variante dans laquelle il est prévu un sélecteur 10B à deux boutons 39 et 40 seulement comportant chacun deux paires de contact fixe 41a, 41b et 41c et 41d respectivement, coopérant avec des contacts mobiles 42 et 43. Ce sélecteur 10B est conçu de telle façon que lorsqu'on actionne l'un ou l'autre des boutons 39 ou 40, on actionne respectivement tout d'abord les contacts 41a et 41c et ensuite seulement les contacts 41b et 41d.

## Revendications

1. Dispositif moteur pour organe mobile notamment pour lève-vitre d'un véhicule automobile, comportant un moteur électrique d'entraînement (1) couplé à l'organe mobile, ce moteur étant du type à courant continu et à aimants permanents et comprenant un induit (4) dont le collecteur (5) coopère avec deux balais principaux (7a, 7b) placés sur la ligne neutre (LN) de l'induit (4) et un troisième balais auxiliaire (8a, 8b; 8c) écarté angulairement de la ligne neutre, ce moteur étant relié électriquement à un sélecteur (10, 10A; 10B) capable d'appliquer sélectivement la tension d'alimentation auxdits balais (7a, 7b, 8a, 8b, 8c) pour déterminer des vitesses distinctes du moteur, caractérisé en ce que ledit moteur (1) comporte un quatrième balai (8b; 8c) placé du même côté que le troisième balai par rapport à la ligne neutre (LN) et en ce que ledit sélecteur (10; 10A; 10B) est agencé pour appliquer sélectivement l'une ou l'autre des polarités de la tension d'alimentation auxdits troisième et quatrième balais pour obtenir un fonctionnement réversible du moteur à chacune desdites vitesses distinctes.

2. Dispositif moteur suivant la revendication 1, caractérisè en ce que le troisième et le quatrième balais sont confondus (8c) en étant placé à une distance angulaire de 90° par rapport à ladite ligne neutre.

3. Dispositif moteur suivant la revendication 2, caractérisé en ce que le collecteur (5) dudit moteur (1) comporte un nombre (N) de lames (9) tel que N = 2 + 4k dans lequel k est un nombre entier.

4. Dispositif moteur la revendication 3, caractérisé en ce que ledit collecteur (5) comporte 10, 14 ou 18 lames.

5. Dispositif moteur suivant l'une quelconque des revendications 1 à 4, caractérisé en ce que ledit sélecteur (10) comporte un contact mobile de commande (11) à quatre positions actives définies par quatre contacts fixes (13a à 13d) situés par paire de part et d'autre d'une position de repos du contact mobile, en ce que les contacts fixes (13b, 13c) adjacents à la position de repos sont reliés auxdits balais principaux (7a, 7b) et les deux autres contacts fixes (13a, 13d) auxdits balais auxiliaires (8a, 8b; 8c) et en ce qu'il est prévu en outre un cinquième contact fixe (14) associé à l'une des paires (13c, 13d) desdits quatre contacts fixes (13a à 13d), ce cinquième contact fixe étant relié à la bobine (15) d'un relais inverseur (17) pour appliquer sélectivement l'un des pôles (18) de la source d'alimentation auxdits balais.

6. Dispositif moteur suivant la revendication 5, caractérisé en ce que ledit contact mobile (11) est monté à rotation ou à coulissement rectiligne.

7. Dispositif suivant l'une quelconque des revendications 1 à 4, caratérisé en ce que ledit sélecteur (10A) est à quatre boutons poussoirs (25a à 25d) dont les contacts sont reliés à un montage à relais (26 à 31; 32, 33, 34) pour appliquer sélectivement les polarités appropriées aux balais (7a, 7b, 8a, 8b; 8c) dudit moteur (1).

8. Dispositif moteur suivant l'une quelconque des revendications 1 à 4, caractérisé en ce que ledit sélecteur (10) comporte deux boutons poussoirs (39, 40) ayant chacun deux positions définies par des contacts (41a, 41b, 41c, 41d) qui sont agencés dans chaque bouton poussoir pour être actionnés successivement de manière à appliquer sélectivement les polarités de la source d'alimentation aux balais (7a, 7b, 8a, 8b; 8c) dudit moteur (1).

## Patentansprüche

1. Antriebsvorrichtung für ein bewegliches Teil, insbesondere einen Kraftfahrzeug-Scheibenheber, mit einem mit dem beweglichen Teil verbundenen elektrischen Gleichstrommotor (1), welcher Dauermagnete und einen Rotor (4) aufweist, dessen Kollektor (5) mit zwei Hauptbürsten (7a, 7b) zusammenwirkt, die auf der neutralen Achse (LN) des Rotors (4) angeordnet sind, und mit einer dritten Hilfsbürste (8a, 8b; 8c), welche mit einem Winkelabstand zu der neutralen Achse angeordnet ist, wobei der Motor elektrisch mit einem Wähler (10, 10A; 10B) verbunden ist, um für unterschiedliche Motordrehzahlen den Bürsten (7a, 7b, 8a, 8b, 8c) die ausgewählten Speisespannungen zuzuführen, dadurch gekennzeichnet, daß der Motor (1) eine vierte Bürste (8b; 8c) aufweist, welche auf derselben Seite der neutralen Achse (LN) angeordnet ist wie die dritte Bürste, sowie dadurch, daß der Wähler (10, 10A, 10B) so ausgebildet ist, daß die dritte und vierte Bürste für einen umkehrbaren Betrieb des Motors bei jeder unterschiedlichen Drehzahl mit der einen oder der anderen Spannungspolarität beaufschlagt wird.

2. Antriebsvorrichtung nach Anspruch 1, dadurch gekennzeichnet, daß die dritte und die vierte Bürste zusammenfallen (8c) und zur neutralen Achse in einem Winkel von 90° angeordnet sind.

3. Antriebsvorrichtung nach Anspruch 2, dadurch gekennzeichnet, daß der Kollektor (5) des Motors (1) eine solche Anzahl (N) von Lamellen (9) aufweist, daß N = 2 + 4k gilt, wobei k eine ganze Zahl ist.

4. Antriebsvorrichtung nach Anspruch 3, dadurch gekennzeichnet, daß der Kollektor (5) 10, 14 oder 18 Lamellen aufweist.

5. Antriebsvorrichtung nach einem der Ansprüche 1 bis 4, dadurch gekennzeichnet, daß der Wähler (10) einen beweglichen Steuerkontakt (11) mit vier aktiven Positionen aufweist, welche durch vier ortsfeste Kontakte (13a bis 13d) bestimmt sind, die jeweils paarweise zu beiden Seiten einer Ruhestel-

**0 076 206**

lung des beweglichen Kontakte angeordnet sind, daß die ortsfesten Kontakte (13b, 13c) neben der Ruhestellung mit den beiden Hauptbürsten (7a, 7b) und die beiden anderen ortsfesten Kontakte (13a, 13d) mit den Hilfsbürsten (8a, 8b; 8c) verbunden sind und daß ein fünfter ortsfester Kontakt (14) vorgesehen ist, der dem einen Paar (13c, 13d) der vier ortsfesten Kontake (13a bis 13d) zugeordnet und mit der Wicklung (15) eines Umkehrrelais (17) verbunden ist, um die Bürsten selektiv an einen der Pole (18) der Speisequelle anzuschließen.

6. Antriebsvorrichtung nach Anspruch 5, dadurch gekennzeichnet, daß der bewegliche Kontakt (11) entweder drehbar oder geradlinig verschiebbar angeordnet ist.

7. Vorrichtung nach einem der Ansprüche 1 bis 4, dadurch gekennzeichnet, daß der Wähler (10A) vier Drucktasten (25a bis 25d) aufweist, deren Kontakte mit einer Relaisanordnung (26 bis 31; 32, 33, 34) verbunden sind, um die Bürsten (7a, 7b, 8a; 8c) des Motors (1) selektiv mit der entsprechend gepolten Spannung zu speisen.

8. Antriebsvorrichtung nach einem der Ansprüche 1 bis 4, dadurch gekennzeichnet, daß der Wähler (10) zwei Drucktasten (39, 40) umfaßt, welche jeweils zwei durch Kontakte (41a, 41b, 41c, 41d) bestimmte Positionen aufweisen, wobei die Kontakte sich in jeder der Drucktasten befinden, um nacheinander die Bürsten (7a, 7b, 8a, 8b; 8c) des Motors (1) mit entsprechender Polung an die Speisestromquelle anzuschließen.

## Claims

1. A driving device for a movable element, in particular for a window raiser of a motor vehicle, comprising an electric driving motor (1) coupled to the movable element, this motor being of the DC type and having permanent magnets and including an armature (4) whose commutator (5) cooperates with two main branches (7a, 7b) placed on the mutual line (LN) of the armature (4) and a third auxiliary brush (8a, 8b; 8c) which is angularly offset from the mutual line, this motor being electrically connected to a selector (10, 10A; 10B) capable of selectively applying the supply voltage to said brushes (7a, 7b, 8a, 8b, 8c) so as to determine distinct speeds of the motor, characterised in that said motor (1) comprises a fourth brush (8b, 8c) placed on same side as the third brush relative to the mutual line (LN) and said selector (10, 10A; 10B) is adapted to apply selectively either of the polarities of the supply voltage to said third and fourth brushes so as to obtain a reversible operation of the motor at each of said distinct speeds.

2. A driving device according to claim 1, characterised in that the third and fourth brushes are coincident (8c) and placed at an angular distance of 90° relative to said mutual line.

3. A driving device according to claim 2, characterised in that the commutator (5) of said motor (1) has a number N of strips (9) so that $N = 2 + 4k$ in which k is a whole number.

4. A driving device according to claim 3, characterised in that said commutator (5) has ten, fourteen or eighteen strips.

5. A driving device according to any one of the claims 1 to 4, characterised in that said selector (10) has a movable control contact (11) having four active positions defined by four fixed contacts (13a, to 13d) located in pairs on each side of a position of rest of the movable contact, the fixed contacts (13b, 13c) adjacent to the position of rest are connected to said main brushes (7a, 7b) and the other two fixed contacts (13a, 13b) are connected to said auxiliary brushes (8a, 8b; 8c) and there is further provided a fifth fixed contact (14) associated with one of the pairs (13c 13d) of said four fixed contacts (13a to 13d), this fifth fixed contact being connected to the coil (15) of a reversing relay (17) for the purpose of selectively applying one of the poles (18) of the source of supply to said brushes.

6. A driving device according to claim 5, characterised in that said movable contact (11) is mounted to be rotatable or slidable in a rectilinear manner.

7. A device according to any one of the claims 1 to 4, characterised in that said selector (10A) has four push buttons (25a to 25d) whose contacts are connected to a relay circuit (26 to 31, 32, 33, 34) so as to selectively apply the appropriate to the brushes (7a, 7b, 8a, 8b; 8c) of said motor (1).

8. A driving device according to any one of the claims 1 to 4, characterised in that said selector (10) comprises two push buttons (39, 40) each of which has two positions defined by contacts (41a, 41b, 41c, 41d) which are arranged in each push button to be actuated in succession in such manner as to apply selectively the polarities of the source of supply to the brushes (7a, 7b, 8a, 8b; 8c) of said motor (1).

7

## FIG.1

## FIG.3

## FIG. 5

## FIG. 4

## FIG. 2

# FIG. 6

0 076 206

## FIG.7

## FIG.8

15